# EUROPÄISCHE PATENTANMELDUNG

(11) **EP 0 640 611 A1**
(43) Veröffentlichungstag der Anmeldung: **01.03.1995**
(21) Anmeldenummer: 94112900.9
(22) Anmeldetag: 18.08.1994
(51) Int. Cl.: C07F 7/18, C04B 41/48, C04B 26/08, D06M 13/00

(54) **Fluoratome enthaltende Alkoxysilanverbindungen**

(30) Priorität: 31.08.1993 DE 4329262
(71) Anmelder: BAYER AG, 51368 Leverkusen (DE)
(72) Erfinder: Kirchmeyer, Stephan, Dr., D-51373 Leverkusen (DE); Richter, Martin, Dr., D-40764 Langenfeld (DE)

(57) **Zusammenfassung**

Fluoratome enthaltende Alkoxysilanverbindungen der allgemeinen Formel (I) 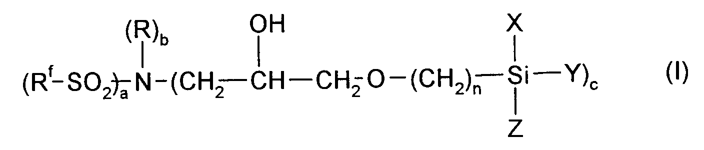
können durch Addition von Perfluoralkylsulfonamiden an Glycidylsilane hergestellt werden. Sie sind als Hydrophobierungs- und Oleophobierungsmittel für Textilien und Gesteinsmaterialien geeignet.

## Beschreibung

Die vorliegende Erfindung betrifft Fluoratome enthaltende Alkoxysilanverbindungen, ein Verfahren zu ihrer Herstellung und ihre Verwendung als Behandlungs-, Schutz- und Imprägniermittel für Gesteinsmaterialien, textile Materialien und Papier.

Verbindungen mit Perfluoralkangruppen weisen aufgrund ihrer Oberflächenspanung ausgeprägte Effekte bezüglich Wasser- und Schmutzabweisung auf DE-A 39 13 485 beschreibt Fluor enthaltende Sulfonamidoalkoxysilane als wasser- und ölabweisende Verbindungen. Die Synthese derartiger Verbindungen ist jedoch aufwendig und für die technische Durchführung wenig geeignet. So wird in einem Beispiel in einer mehrstufigen Reaktion das Perfluoralkylsulfonamid mit Allylbromid umgesetzt, dann mit Trichlorsilan hydrosilyliert und anschließend mit Alkohol zum Perfluoralkylsulfonamidoalkoxysilan reagiert.

Die Aufgabe der Erfindung bestand darin, neuartige Fluor enthaltende Alkoxysilanverbindungen zur Verfügung zu stellen, welche einfach herstellbar sind und sich als wasser-, öl- und schmutzabweisende Materialien eignen.

Überraschenderweise wurde nun gefunden, daß sich Verbindungen der nachfolgenden allgemeinen Formel (I) durch Umsetzung von Perfluorsulfonamiden mit Glycidylsilanen in einer Einstufenreaktion in hoher Ausbeute herstellen lassen. Dies ist überraschend und für den Fachmann nicht vorhersehbar, da nach Meinung der Fachleute Sulfonamide mit Glycidylverbindungen aufgrund der geringen Nukleophilie der Sulfonamidgruppierung nicht reagieren sollten. Verbindungen der allgemeinen Formel (I) eignen sich zudem als Behandlungs-, Schutz- und Imprägniermittel für Gesteinsmaterialien, textilen Materialien und Papier.

Gegenstand der Erfindung sind daher Fluoratome enthaltende Silanverbindungen der allgemeinen Formel (I) 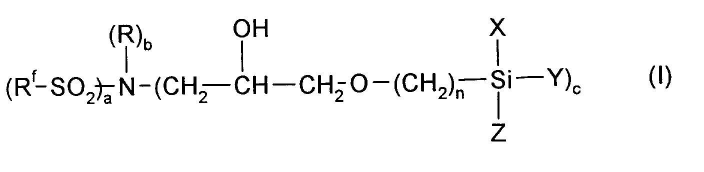
wobei
- R^{f}: eine monovalente Perfluoralkylgruppe mit 4 bis 20 Kohlenstoffatomen bedeutet,
- R: eine monovalente, unterhalb von 100°C gegenüber Isocyanatgruppen inerte organische Gruppe bedeutet,
- X, Y, Z: für gleiche oder verschiedene, unterhalb von 100°C gegenüber Isocyant inerte organische Reste stehen mit der Maßgabe, daß mindestens einer dieser Reste für eine Alkoxygruppe steht
- a: 1 oder 2,
- b: 0 oder 1,
- c: 3-a-b, jedoch mindestens 1 und
- n: eine ganze Zahl zwischen 2 und 4
bedeuten.

Gegenstand der Erfindung ist weiterhin ein Verfahren zur Herstellung von Verbindungen der allgemeinen Formel (I), dadurch gekennzeichnet, daß 1 Mol einer Verbindung der allgemeinen Formel (II) 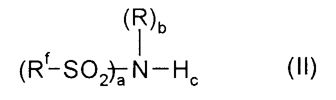
wobei
- R^{f}: eine monovalente Perfluoralkylgruppe mit 4 bis 20 Kohlenstoffatomen bedeutet,
- R: eine monovalente, unterhalb von 100°C gegenüber Isocyanatgruppen inerte organische Gruppe bedeutet,
- a: 1 oder 2,
- b: 0 oder 1,
- c: 3-a-b, jedoch mindestens 1 steht,
mit c Molen einer Verbindung der allgemeinen Formel (III) 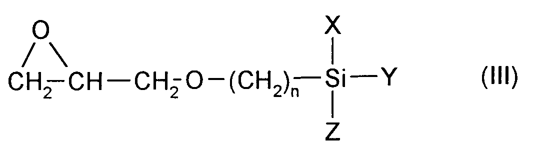
wobei
- X, Y, Z: für gleiche oder verschiedene, unterhalb von 100°C gegenüber Isocyant inerte organische Reste stehen mit der Maßgabe, daß mindestens einer dieser Reste für eine Alkoxygruppe steht
- n: eine ganze Zahl zwischen 2 und 4
bedeuten, bei Temperatur von -20 bis 200°C umgesetzt wird.

Gegenstand der Erfindung ist schließlich die Verwendung der Verbindungen der allgemeinen Formel (I) als Behandlungs-, Schutz- und Imprägniermittel für Gesteinsmaterialien, textile Materialien und Papier.

Bei dem Rest R^{f} handelt es sich um eine monovalente Perfluoralkylgruppe mit 4 bis 20 Kohlenstoffatomen, z.B. geradkettige oder verzweigte Perfluorbutan-, Perfluorpentan, Perfluorhexan-, Perfluorheptan-, Perfluoroctan, Perfluornonan-, Perfluordecan- oder Perfluordodecangruppen, bevorzugt Perfluorbutan- und Perfluoroctangruppen. Bei der Gruppe R handelt es sich um eine monovalente, unterhalb von 100°C gegenüber Isocyanatgruppen inerte organische Gruppe, vorzugsweise um eine monovalente aliphatische Gruppe mit 1 bis 4 Kohlenstoffatomen, z.B. eine Methyl-, Ethyl-, Propyl-, Butyl- oder 1-Methylethylgruppe, vorzugsweise um eine Methyl- oder Ethylgruppe.

Die organische Reste X, Y, Z können gleich oder verschieden sein und sind unterhalb von 100°C gegenüber Isocyanat inert. Bevorzugt handelt es sich bei X, Y, Z um monovalente, gegebenenfalls durch ein bis zwei Sauerstoffatome unterbrochene Alkoxygruppen mit 1 bis 6 Kohlenstoffatomen wie z.B. Methoxy-, Ethoxy-, Propoxy-, Butoxy- oder Methoxyethoxygruppen, Cycloalkoxygruppen mit 6 bis 10 Kohlenstoffatomen wie z.B. Cyclohexyloxygruppen, Aryloxygruppen mit 6 bis 10 Kohlenstoffatomen, wie z.B. Phenoxygruppen, Alkylgruppen mit 1 bis 6 Kohlenstoffatomen wie z.B. Methyl-, Ethyl-, Propyl- oder Butylgruppen, Cycloalkylgruppen mit 6 bis 10 Kohlenstoffatomen wie z.B. Cyclopentyl-, Cyclohexyl- oder Methylcyclohexylgruppen, oder gegebenenfalls substituierte Arylgruppen mit 6 bis 10 Kohlenstoffatomen wie z.B. Phenyl- oder Tolylgruppen. Wichtig ist, daß es bei mindestens einem der Reste X, Y oder Z um eine Alkoxygruppe handelt.

Vorzugsweise besitzen die erfindungsgemäßen Fluoratome enthaltende Alkoxysilanverbindungen der allgemeinen Formel (I) genau eine Perfluoralkylsulfonylgruppe R^{f} und eine Alkylgruppe R. Es ist jedoch auch möglich, Bis(perfluoralkylsulfonyl)imide bzw. unsubstituierte Perfluoralkylsulfonamide umzusetzen, wodurch Bis(perfluoralkylsulfonyl)imidoalkoxysilane und Perfluoralkylsulfonamidobisalkoxysilane erhalten werden.

Die erfindungsgemäßen Perfluoralkylsulfonamidoalkoxysilane können dadurch hergestellt werden, daß 1 Mol einer Verbindung der allgemeinen Formel (II), 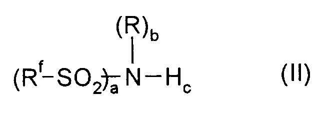
wobei
- R^{f}: eine monovalente Perfluoralkylgruppe mit 4 bis 20 Kohlenstoffatomen bedeutet,
- R: eine monovalente, unterhalb von 100°C gegenüber Isocyanatgruppen inerte organische Gruppe bedeutet, und
- a: für 1 oder 2,
- b: für 0 oder 1 und
- c: für 3-a-b, jedoch mindestens 1 steht,
mit c Molen einer Verbindung der allgemeinen Formel (III) 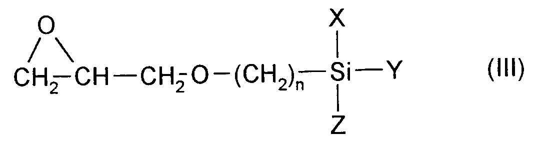
wobei
- X, Y, Z: für gleiche oder verschiedene, unterhalb von 100°C gegenüber Isocyant inerte organische Reste stehen mit der Maßgabe, daß mindestens einer dieser Reste für eine Alkoxygruppe steht und
- n: eine ganze Zahl zwischen 2 und 4
bedeuten, bei Temperatur von -20 bis 200°C, bevorzugt zwischen 60 und 150°C, besonders bevorzugt zwischen 80 und 120°C, umgesetzt wird. Das Molverhältnis 1:c richtet sich nach der chemischen Natur der Ausgangsverbindungen (II) und beträgt für N-Alkylperfluoralkylsulfonamide und Bis(perfluoralkylsulfon)imide 1:1 und für unsubstituierte Perfluoralkylsulfonamide 1:2. Die Sulfonamide bzw. Sulfonimide (II) reagieren mit der Glycidylverbindung (III) im Sinne einer ringöffnenden nucleophilen Substitution, wobei der Angriff praktisch ausschließlich am 1-Kohlenstoffatom der Glycidylgruppe erfolgt. Die Reaktion kann jedoch auch zu geringen Mengen eines Produktes führen, welches durch einen Angriff des Sulfonamids bzw. des Sulfonimids auf das 2-Kohlenstoffatom der Glycidylgruppe entsteht.

Als Ausgangsverbindungen der allgemeinen Formel (II) eignen sich Perfluoralkylsulfonamide wie z.B. N-Methyl-1-perfluorbutansulfonamid, N-Ethyl-1-perfluorbutansulfonamid, N-Propyl-1-perfluorbutansulfonamid, N-Methyl-1-perfluorpentansulfonamid, N-Ethyl-1-perfluorpentansulfonamid, N-Methyl-1-perfluorhexansulfonamid, N-Ethyl-1-perfluorhexansulfonamid, N-Propyl-1-perfluorhexansultonamid, N-Methyl-1-perfluorheptansulfonamid, N-Ethyl-1-perfluorheptansulfonamid, N-Butyl-1-perfluorheptansulfonamid, N-Methyl-1-perfluoroctansulfonamid, N-Ethyl-1-perfluoroctansulfonamid, N-1-Methylethyl-1-perfluoroctansulfonamid, N-Butyl-1-perfluoroctansulfonamid, N-Ethyl-1-perfluornonansulfonamid, N-Propyl-1-perfluordecansulfonamid und N-Propyl-1-perfluordodecanonansulfonamid, Perfluorbutansulfonamid, Perfluorhexansulfonamid und Perfluoroctansulfonamid und Bis(perfluoralkylsulfonyl)imide wie Bis(perfluorbutylsulfon)imid, Bis(perfluorhexylsulfon)imid und Bis(perfluoroctylsulfon)imid.

Bevorzugte Glycidylsilane sind 3-Glycidylpropyltrimethoxysilan und 3-Glycidylpropyltris(methoxyethoxy)silan.

Der Reaktionsschritt kann anhand Abnahme der Epoxidbande bei ca. 910 cm⁻¹ und der N-H-Bande bei ca. 3 170 cm⁻¹ im Infrarotspektrum kontrolliert werden. Nach vollständigem Umsatz der Ausgangsstoffe sind beide Banden praktisch verschwunden; dafür tritt als neue Bande die Hydroxylschwingung bei ca. 3 400 bis 3 500 cm⁻¹ auf. Die Reaktion läuft nach Vermischen der Reaktionspartner ohne weiteres spontan ab. Vorzugsweise wird unter Ausschluß von Feuchtigkeit, z.B. durch Beschleierung mit Stickstoff gearbeitet. Die Reaktion wird bevorzugt ohne Zusatz von Lösungsmitteln durchgeführt, jedoch ist es auch möglich, inerte Lösungsmittel wie Aceton, Tetrahydrofuran, Methyl-tert.-butylether, Toluol, Chloroform oder Dichlormethan während der Reaktion zuzusetzen. Es ist auch möglich, während der Reaktion die Reaktionsgeschwindigkeit steigernde Agentien wie z.B. quartäre Ammoniumsalze zuzusetzen. Das Arbeiten unter Normaldruck ist bevorzugt, jedoch kann auch unter erhöhtem Druck gearbeitet werden. Im übrigen erfordert das Verfahren keine verfahrenstechnischen Besonderheiten. Das gleiche gilt für die Aufarbeitung. Nach Abtrennung der Niedrigsieder (z.B. durch Destillation oder Dünnschichten) fällt das Produkt als wasserhelle oder schwach gelbliche Flüssigkeit mit einer Reinheit größer 95 Prozent an und kann erfindungsgemäß verwendet werden.

In einer besonderen Variante werden die N-Alkyl-Perfluoralkylsulfonamid-Isomere, wie sie in der technischen Herstellung durch Elektrofluorierung und anschließende Umsetzung mit Alkylaminen anfallen, gemeinsam mit dem Glycidylalkoxysilan umgesetzt. Die dadurch erhältlichen Gemische von N-Alkyl-perfluoralkylsulfonamidoalkoxysilane können analog zu den reinen Verbindungen der allgemeinen Formel (I) als Behandlungs-, Schutz- und Imprägniermittel für Gesteinsmaterialien, textile Materialien und Papier verwendet werden.

### Beispiele

### Beispiel 1

In einem 500 ml Dreihalskolben mit Inuenthermometer, Stickstoffeinlaß und mechanischer Rührung werden unter Stickstoffbeschleierung und Feuchtigkeitsausschluß 51,30 g (0,1 Mol) N-Methylperfluoroctylsulfonamid (Molverhältnis aus n-Isomer und iso-Isomer ca. 80:20) und 36,80 g (0,1 Mol) 3-Glycidylpropyltris(methoxyethoxy)silan 24 Stunden auf 100°C erhitzt. Im Anschluß an diese Zeit sind im Infrarotspektrum die Banden bei 912 cm⁻ ¹ und 3 170 cm⁻¹ verschwunden. Das Infrarotspektrum verändert sich bei weiterem Erhitzen nicht mehr. Es entsteht ein Gemisch isomerer 3-(N-Methyl-N-perfluoroctylsulfonamido)-2-hydroxypropoxypropyltris(methoxyethoxy)silane als leicht gelbliche viskose Flüssigkeit.

### Beispiel 2

Analog zu Beispiel 1 werden 51,30 g (0,1 Mol) N-Methylperfluoroctylsulfonamid (Molverhältnis aus n-Isomer und iso-Isomer ca. 80:20) und 23,60 g (0,1 Mol) 3-Glycidylpropyltrimethoxysilan umgesetzt. Es entsteht ein Gemisch isomerer 3-(N-Methyl-N-perfluoroctylsulfonamido)-2-hydroxypropoxypropyltrimethoxysilane als leicht gelbliche viskose Flüssigkeit.

### Beispiel 3

Analog zu Beispiel 1 werden 31,30 g (0,1 Mol) N-Methylperfluorbutylsulfonamid (Molverhältnis aus n-Isomer und iso-Isomer ca. 95:5) und 23,60 g (0,1 Mol) 3-Glycidylpropyltrimethoxysilan umgesetzt. Es entsteht ein Gemisch isomerer 3-(N-Methyl-N-perfluorbutylsulfonamido)-2-hydroxypropoxypropyltrismethoxysilane als leicht gelbliche viskose Flüssigkeit.

### Beispiel 4

Analog zu Beispiel 1 werden 31,30 g (0,1 Mol) N-[Methylperfluorbutylsulfonamid (Molverhältnis aus n-Isomer und iso-Isomer ca. 95:5) und 36,80 g (0,1 Mol) 3-Glycidylpropyltris(methoxyethoxy)silan umgesetzt. Es entsteht ein Gemisch isomerer 3-N-Methyl-N-perfluorbutylsulfonamido)-2-hydroxypropoxypropyltris(methoxyethoxy)silane als leicht gelbliche viskose Flüssigkeit.

### Beispiel 5 (Verwendungsbeispiel)

Proben von üblichem Kalksandstein (Abmessungen 60 mm x 40 mm x 10 mm) werden 5 Tage bei 50°C gelagert und nach Abkühlung 30 Sekunden in eine 30 gew.-%ige Lösung des Fluoralkoxysilans aus Beispiel 1 in Butylacetat getaucht. Die Proben werden 7 Tage bei Raumtemperatur und 24 Stunden bei 50°C gelagert. Anschließend wird die Wasseraufnahme nach 24 Stunden Wasserlagerung bestimmt. Die Proben nehmen im Mittel 1,8 Gew.-% Wasser auf. Im Vergleich dazu besitzen unbehandelte Proben eine Wasseraufnahme von 10,5 Gew.-% in 24 Stunden.

### Beispiel 6 (Verwendungsbeispiel)

Baumwollgewebe wird 30 Sekunden lang in eine 5 gew.-%ige Lösung des Fluoralkoxysilans aus Beispiel 1 in Butylacetat getaucht und 5 Tage bei Raumtemperatur konditioniert. Auf das Baumwollgewebe wird je ein Tropfen Paraffinöl und Wasser gesetzt. Beide Tropfen benetzen das Gewebe nicht (Randwinkel größer 90°). Im Vergleich dazu benetzen Paraffinöl und Wasser nichtbehandeltes Baumwollgewebe sofort und werden aufgesaugt.

## Patentansprüche

1. Fluoratome enthaltende Silanverbindungen der allgemeinen Formel (I) 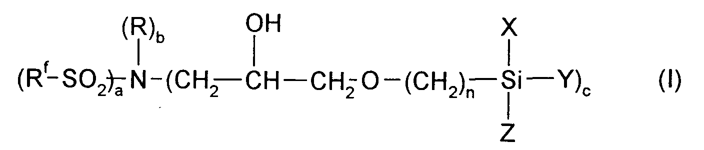 wobei
R^{f} eine monovalente Perfluoralkylgruppe mit 4 bis 20 Kohlenstoffatomen bedeutet,
R eine monovalente, unterhalb von 100°C gegenüber Isocyanatgruppen inerte organische Gruppe bedeutet,
X, Y, Z für gleiche oder verschiedene, unterhalb von 100°C gegenüber Isocyant inerte organische Reste stehen mit der Maßgabe, daß mindestens einer dieser Reste für eine Alkoxygruppe steht
a 1 oder 2,
b 0 oder 1,
c 3-a-b, jedoch mindestens 1 und
n eine ganze Zahl zwischen 2 und 4
bedeuten.

2. Fluoratome enthaltende Alkoxysilanverbindungen gemäß Anspruch 1, wobei
R eine monovalente aliphatische Gruppe mit 1 bis 4 Kohlenstoffatomen bedeutet,
X, Y, Z gleiche oder verschiedene, monovalente, gegebenenfalls durch ein bis 2 Sauerstoffatome unterbrochene Alkoxygruppen mit 1 bis 6 Kohlenstoffatomen, Cycloalkoxygruppen mit 6 bis 10 Kohlenstoffatomen, eine Aryloxygruppe mit 6 bis 10 Kohlenstoffatomen, Alkylgruppen mit 1 bis 6 Kohlenstoffatomen, Cycloalkylgruppen mit 6 bis 10 Kohlenstoffatomen oder gegebenenfalls substituierte Arylgruppen mit 6 bis 10 Kohlenstoffatomen bedeuten mit der Maßgabe, daß mindestens einer dieser Reste für eine Alkoxygruppe steht und
a 1,
b 1,
c 1 und
n 3
bedeuten.

3. Verfahren zur Herstellung von Verbindungen gemäß Anspruch 1 und 2, dadurch gekennzeichnet, daß 1 Mol einer Verbindung der allgemeinen Formel (II) 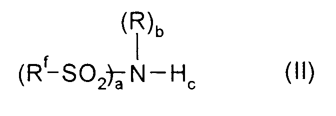 wobei
R^{f} eine monovalente Perfluoralkylgruppe mit 4 bis 20 Kohlenstoffatomen bedeutet,
R eine monovalente, unterhalb von 100°C gegenüber Isocyanatgruppen inerte organische Gruppe bedeutet,
a 1 oder 2,
b 0 oder 1,
c 3-a-b, jedoch mindestens 1 stehen,
mit c Molen einer Verbindung der allgemeinen Formel (III) 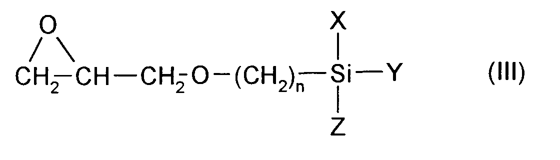 wobei
X, Y, Z für gleiche oder verschiedene, unterhalb von 100°C gegenüber Isocyant inerte organische Reste stehen mit der Maßgabe, daß mindestens einer dieser Reste für eine Alkoxygruppe steht
n eine ganze Zahl zwischen 2 und 4
bedeuten, bei Temperatur von -20 bis 200°C umgesetzt wird.

4. Verfahren gemäß Anspruch 3, wobei in der allgemeinen Formel (II)
a = 1 und
b = 1,
und in der allgemeinen Formel (III)
X, Y, Z gleiche oder verschiedene, monovalente, gegebenenfalls durch ein bis zwei Sauerstoffatome unterbrochene Alkoxygruppen mit 1 bis 6 Kohlenstoffatomen, Cycloalkoxygruppen mit 6 bis 10 Kohlenstoffatomen, Alkylgruppen mit 1 bis 6 Kohlenstoffatomen, Cycloalkylgruppen mit 6 bis 10 Kohlenstoffatomen oder gegebenenfalls substituierte Arylgruppen mit 6 bis 10 Kohlenstoffatomen bedeuten mit der Maßgabe, daß mindestens einer dieser Reste für eine Alkoxygruppe steht und
c = 1 und
n = 3.

5. Verwendung von einer oder mehreren der Verbindungen gemäß einem der Ansprüche 1 bis 4 als Behandlungs-, Schutz- und Imprägniermittel für Gesteinsmaterialien, textile Materialien und Papier.
